# EUROPÄISCHE PATENTSCHRIFT

(11) **EP 1 502 233 B1**
(45) Veröffentlichungstag und Bekanntmachung des Hinweises auf die Patenterteilung: **14.09.2005**
(21) Anmeldenummer: 03788975.5
(22) Anmeldetag: 29.10.2003
(51) Int. Cl.: G06K 17/00, B42D 15/10, G06K 1/12, B32B 31/00

(54) **VERFAHREN UND VORRICHTUNG ZUM BEREITSTELLEN EINES KARTENTRÄGERS FÜR EINE ZUSAMMENFÜHRUNG MIT EINER KARTE**
METHOD AND DEVICE FOR PREPARING A CARD SUPPORT FOR UNITING WITH A CARD
PROCEDE ET DISPOSITIF POUR PREPARER UN SUPPORT DE CARTE POUR UNE JONCTION AVEC UNE CARTE

(30) Priorität: 30.10.2002 DE 10250653
(43) Veröffentlichungstag der Anmeldung: 02.02.2005
(73) Patentinhaber: BÖWE SYSTEC AG, 86159 Augsburg (DE)
(72) Erfinder: ZETTLER, Hubert, 86169 Augsburg (DE)
(74) Vertreter: Schoppe, Fritz
(86) Internationale Anmeldenummer: PCT/EP2003/012008
(87) Internationale Veröffentlichungsnummer: WO 2004/039602

(56) Entgegenhaltungen:
- DE-A- 19 533 444

## Beschreibung

Die vorliegende Erfindung bezieht sich auf ein Verfahren und auf eine Vorrichtung zum Handhaben von Karten, und hier insbesondere auf ein Verfahren und auf eine Vorrichtung zum Bereitstellen eines Kartenträgers für eine Zusammenführung mit einer solchen Karte, insbesondere einer Kunststoffkarte.

Bekannte Systeme zur Handhabung von Kunststoffkarten arbeiten derart, dass die Kunststoffkarten, z. B. dicke Kunststoffkarten vom Typ CR-80, mit Kartenträgern automatisch in variabler Stückzahl verbunden (appliziert) werden. Die mit Kunststoffkarten versehenen Kartenträger werden dann in einer Kuvertierstation in Kuverts verpackt oder werden gefalzt und verschweißt und anschließend einer weiteren Verarbeitung zugeführt. Zusätzlich können den Kartenträgern noch beliebige Beilagen zugeordnet werden, die dann gemeinsam kuvertiert und/oder gefalzt werden.

Im Stand der Technik sind verschiedene Verfahren und Vorrichtungen zum Applizieren von Kunststoffkarten und Kartenträgern bekannt. Aus der DE 195 08 282 C1 und aus der DE 195 33 444 A1 sind Verfahren und Vorrichtungen bekannt, um Kunststoffkarten und Kartenträger unter Verwendung einer Druckauftragsnummer zusammenzuführen und zu verbinden. Nach dem Zusammenführen und Verbinden werden hier die Kunststoffträger kuvertiert und einer weiteren Verarbeitung zugeführt. Aus der DE 197 25 579 A1 ist ein ähnliches Verfahren bekannt, bei dem die Zusammenführung und Verbindung von Kunststoffkarten und Kartenträgern unter Verwendung einer Prüfsumme verifiziert wird. Aus der DE 197 34 483 A1 ist ein Verfahren und eine Vorrichtung zum Zusammenführen und Verbinden von Kunststoffkarten und Kartenträgern unter Verwendung einer Auftragsnummer bekannt, wobei die Verarbeitung offline erfolgt. Bei den oben genannten bekannten Verfahren handelt es sich um die Verbindung von Kartenträgern und Kunststoffkarten, wobei die Kunststoffkarten einen Magnetstreifen oder andere durch eine Leseeinrichtung auslesbare Speichereinheit aufweisen, um spezifische Daten der Kunststoffkarte oder spezifische Daten eines Inhabers der Kunststoffkarte zu speichern.

Bei allen oben beschriebenen Vorrichtungen und Verfahren wird ein vorbereiteter Kartenträger-Vordruck bereitgestellt, der dann entweder offline oder online mit den erforderlichen Daten, z. B. einer Adresse und dem Brieftext, wodurch aus dem Kartenträger-Vordruck der Kartenträger wird.

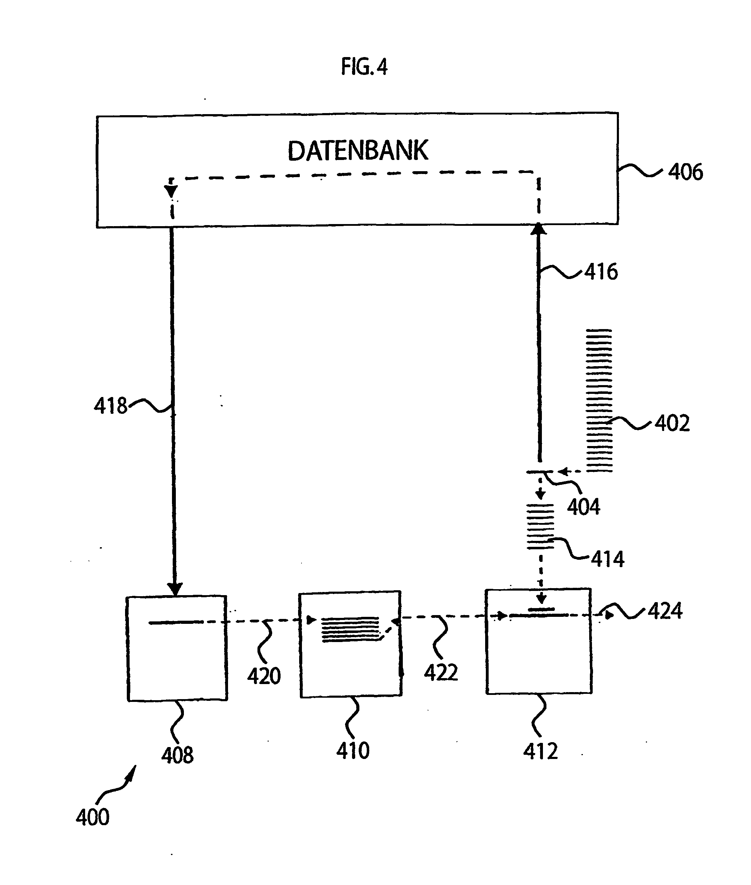

Anhand der schematischen Darstellung einer herkömmlichen Vorrichtung in Fig. 4 wird die den oben beschriebenen, bekannten Verfahren zugrundeliegende Vorgehensweise anhand eines Online-Systems näher erläutert.

Das in Fig. 4 schematisch dargestellte herkömmliche System ist in seiner Gesamtheit mit dem Bezugszeichen 400 versehen. Das System 400 umfasst ein Kartenmagazin 402, in dem eine oder mehrere Kunststoffkarten gehalten sind. Eine Leseeinrichtung 404 empfängt von dem Kartenmagazin 402 aufeinanderfolgend die Kunststoffkarten (in Fig. 4 nicht dargestellt) und liest eine in dem Speicherelement der Kunststoffkarte, z. B. im Magnetstreifen oder in einem Chip, gespeicherte Kartendaten aus. Das System 400 umfasst ferner eine Datenverarbeitungseinrichtung 406, z. B. in der Form eines Computers, die ferner eine Datenbank enthält. Ferner umfasst das System 400 einen Drucker 408, der die Kartenträger für die Kunststoffkarten erzeugt. Über einen Kartenträgerpuffer 410 werden die bedruckten Kartenträger einer Appliziereinrichtung 412 bereitgestellt. Die Appliziereinrichtung 412 empfängt ferner von einem Kartenpuffer 414 die zu applizierenden Kunststoffkarten und gibt diese zur weiteren Verarbeitung an andere Handhabungsstationen des Systems (in Fig. 4 nicht gezeigt) aus.

Die Funktionsweise des in Fig. 4 gezeigten Systems ist derart, dass die von der Leseeinrichtung 404 ausgelesenen Kartendaten an die Datenverarbeitungseinrichtung 406 ausgegeben werden, wie dies durch den Pfeil 416 angedeutet ist. In der Datenverarbeitungseinrichtung 406 wird unter Ausnutzung der empfangenen Kartendaten auf die Datenbank zugegriffen, um die für die Erzeugung des Kartenträgers erforderlichen Druckdaten auszulesen. Diese ausgelesenen Druckdaten werden dann dem Drucker 408 bereitgestellt, wie dies durch den Pfeil 418 angedeutet ist. Der Drucker 408 empfängt die Druckdaten und erzeugt den der Kunststoffkarte zugeordneten Kartenträger.

Der Drucker 408 empfängt als Ausgangsmaterial Kartenträger-Vordrucke, welche beispielsweise bereits den Briefkopf und weitere, konstante Informationen des Kunststoffkartenherausgebers enthalten. Werden Kartenträger-Vordrucke empfangen, so wird basierend auf den von der Datenbank empfangenen Daten in dem Drucker 408 der erforderliche Text zur Personalisierung des Kartenträger-Vordrucks aufgedruckt, beispielsweise die Adresse und der Brieftext. Die so erzeugten Kartenträger werden dann dem Puffer 410 bereitgestellt, wie dies durch den Pfeil 420 angedeutet ist. Zusätzlich zu den Textinformationen werden im Drucker 408 noch eine den Kartenträger identifizierende Identifikationsmarkierung auf den Vordruck aufgedruckt, welche einen späteren Abgleich im Applizierer 412 ermöglicht.

Vom Puffer 410 werden die Kartenträger an den Applizierer 412 bereitgestellt, wie dies durch den Pfeil 422 angedeutet ist. Vor dem Verbinden von Kartenträger und Kunststoffkarte erfolgt ein weiterer Lesevorgang im Applizierer 412, indem von dem bereitgestellten Kartenträger die dort aufgedruckte Identifikationsmarkierung ausgelesen wird und in der Verarbeitungseinrichtung 406 mit den Kartendaten einer Kunststoffkarte, die zum Verbinden an dem Applizierer ansteht, verglichen wird. Wird eine Übereinstimmung (Match) der Identifikationsmarkierung und der Kartendaten festgestellt, also bestimmt, dass Kartenträger und Kunststoffkarte zusammengehören, so wird der Applizierer 412 angesteuert, um Kartenträger und Kunststoffkarte zu verbinden und der weiteren Verarbeitung in dem System zuzuführen, wie dies durch den Pfeil 424 angedeutet ist. Wird bestimmt, dass die Kunststoffkarte und der Kartenträger nicht zusammenpassen, so wird sowohl die Kunststoffkarte als auch der Kartenträger aus dem System 400 ausgesteuert.

Bei den anhand der Fig. 4 erwähnten Kunststoffkarten handelt es sich um Kunststoffkarten, die mit der Post versandt werden, wozu unter anderem Kreditkarten, Krankenversicherungskarten, Führerscheine und Personalausweise, Treuekarten, wie z. B. Miles & More, etc. gehören. Das in der Fig. 4 beschriebene bekannte System bereitet die Kunststoffkarten für den Versand vor, wobei dies entweder durch die jeweiligen Herausgeber der Karten selbst erfolgt, oder durch entsprechende Dienstleistungsunternehmen erfolgt, die durch die Herausgeber der Karten damit beauftragt wurden.

Dem in Fig. 4 beschriebenen Online-System werden vorab personalisierte und codierte Kunststoffkarten bereitgestellt. Die erforderlichen Informationen sind ebenfalls in einer Datenbank abgelegt.

An das Karten-Versandsystem 400 werden die Kartenträger-Vordruck-Stapel angelegt und das System wird gestartet. Mit dem Lesen einer jeden Karte wird der Druck des zu der Karte gehörenden Kartenträgers ausgelöst. Bei der nachfolgenden Verarbeitung wird, wie oben beschrieben, basierend auf der Identifikationsmarkierung und den Kartendaten von der Kunststoffkarte überprüft, ob der Kartenträger und die Karte zusammengehören. Im Applizierer 412 wird anschließend die Karte auf dem Kartenträger befestigt. Anschließend kann der Kartenträger mit der Karte gefalzt und mit Beilagen kuvertiert werden.

Anstelle nur einer Karten können auch mehrere Karten mit einem Kartenträger appliziert werden.

Anhand der Fig. 4 wurde ein herkömmliches System beschrieben, welches im Online-Betrieb arbeitet. Dies bedeutet, dass der Drucker innerhalb des Systems angeordnet ist, und während der Verarbeitung der Kunststoffkarten die Kartenträger erzeugt. Alternativ existieren auch Offline-Systeme, bei denen der Drucker nicht in das System integriert ist. Hier werden der Kartenträger, das Anschreiben und die Karten unabhängig voneinander personalisiert und codiert. Die erforderlichen Informationen werden einer Datenbank entnommen. Im Karten-Versandsystem 400 werden dann die beiden Stapel, nämlich die personalisierten Kartenträger und die Kunststoffkarten, angelegt und in der Reihenfolge der Personalisierung verarbeitet. Auch hier wird überprüft, ob Kartenträger und Karte zusammengehören, wobei zusammengehörende Karten und Kartenträger miteinander verbunden werden und anschließend die Kartenträger zusammen mit den Karten gefalzt und mit beliebigen Beilagen kuvertiert werden. Auch hier können mehrere Karten auf einen Kartenträger appliziert werden.

Die oben beschriebene Hinzugabe von Beilagen ist optional.

Der Nachteil der oben beschriebenen, im Stand der Technik bekannten Systeme besteht darin, dass diese mit vorbereiteten Kartenträgern (Offline-Systeme) arbeiten, die in der gleichen Reihenfolge wie die Kunststoffkarten vorsortiert sein müssen und dem Karten-Versandsystem bereitgestellt werden müssen. Bei Online-Systemen besteht der Nachteil darin, dass auch hier nur mit vorgefertigten Kartenträger-Vordrucken gearbeitet wird, welche wiederum entsprechend der Reihenfolge der Kunststoffkarten dem System bereitgestellt werden müssen. Mit anderen Worten ist es auch hier erforderlich, beispielsweise bei der Verarbeitung von Kunststoffkarten von unterschiedlichen Herausgebern die den unterschiedlichen Herausgebern zugeordneten Kartenträger-Vordrucke entsprechend der Reihenfolge der anliegenden Kunststoffkarten zu sortieren.

Dies führt zu einer niedrigen Flexibilität des Gesamtsystems und zu einer überaus großen Fehleranfälligkeit, da hier bereits ein einziger Fehler die Reihenfolge stört, was zu Fehl-Applikationen oder zu einem Entferner von Karte und Träger aus dem System führt. Ferner ist mit solchen herkömmlichen Systemen ein außerordentlich großer Aufwand erforderlich, da eine große Sorgfalt beim Einlegen der Kartenträger bzw. Bereitstellen derselben an das System erforderlich ist. Ferner ist eine visuelle Kontrolle nach dem Aufbringen der Karten auf den Kartenträger unerlässlich, um sicherzustellen dass die Karten eines Herausgebers auch auf den dem Herausgeber zugeordneten Kartenträger-Vordrucken verschickt werden.

Zusammenfassend lässt sich feststellen, dass der Nachteil der heutzutage angewandten Kartenversandsysteme darin zu sehen ist, dass diese, insbesondere beim Versand von Klein- und Kleinstmengen, unsicher, sehr zeitaufwendig und damit auch sehr teuer ist. Wenn oben von Klein- und Kleinstmengen gesprochen wird, ist jedoch darauf hinzuweisen, dass ähnliche Probleme auch bei großen Mengen auftreten.

Aufgrund der oben genannten Probleme ergibt sich bei der Realisierung von herkömmlichen Karten-Versandsystemen eine Reduzierung der Verarbeitungsleistung, verglichen mit der theoretisch möglichen Leistung, die erreichbar ist, wenn keine Fehler auftreten würden.

Ausgehend von diesem Stand der Technik liegt der vorliegenden Erfindung die Aufgabe zugrunde, ein verbessertes Verfahren und eine verbesserte Vorrichtung zum Bereitstellen von Kartenträgern für eine Zusammenführung mit Karten zu schaffen, die eine verbesserte Flexibilität bei der Verarbeitung von Kartenträger-Vordrucken aufweisen, die im Stand der Technik auftretenden Fehler vermeiden und somit zu einer Steigerung der Verarbeitungsleistung und der Verarbeitungssicherheit führen.

Diese Aufgabe wird durch ein Verfahren nach Anspruch 1 und durch eine Vorrichtung nach Anspruch 12 gelöst.

Die vorliegende Erfindung schafft ein Verfahren zum Bereitstellen eines Kartenträgers für eine Zusammenführung mit einer Karte, mit folgenden Schritten:
(a) Bereitstellen der Karte;
(b) Erfassen von Kartendaten von der Karte;
(c) basierend auf den Kartendaten, Bereitstellen eines Kartenträger-Vordrucks, der eine erste Identifikationsmarkierung aufweist;
(d) basierend auf den Kartendaten, Bedrucken des Kartenträger-Vordrucks mit vorbestimmten Daten und einer zweiten, den vorbestimmten Daten zugeordneten Identifikationsmarkierung, um den Kartenträger zu bilden;
(e) Erfassen der ersten Identifikationsmarkierung und der zweiten Identifikationsmarkierung von dem Kartenträger;
(f) basierend auf der ersten Identifikationsmarkierung und auf der zweiten Identifikationsmarkierung, Bestimmen, ob die aufgedruckten Daten und der Kartenträger-Vordruck zusammengehören; und
(g) falls die Zusammengehörigkeit von Daten und Kartenträger-Vordruck bestimmt wird, Bereitstellen des Kartenträgers zur Zusammenführung mit der Karte.

Die vorliegende Erfindung schafft ferner eine Vorrichtung zum Bereitstellen eines Kartenträgers für eine Zusammenführung mit einer Karte, mit
einem Kartenmagazin, das eine Karte oder eine Mehrzahl von Karten hält;
einer Leseeinrichtung, die wirksam mit dem Kartenmagazin verbunden ist, um Kartendaten von einer Karte zu lesen;
einem Kartenträger-Vordruck-Anleger, der einen Kartenträger-Vordruck mit einer ersten Identifikationsmarkierung bereitstellt;
einem Drucker, der von dem Kartenträger-Vordruck-Anleger einen Kartenträger-Vordruck empfängt und mit vorbestimmten Daten und einer zweiten, den vorbestimmten Daten zugeordneten Identifikationsmarkierung bedruckt, um den Kartenträger zu erzeugen;
einer zweiten Leseeinrichtung, die von dem Kartenträger die erste Identifikationsmarkierung und die zweite Identifikationsmarkierung liest; und
einer Verarbeitungseinrichtung, die von der ersten Leseeinrichtung die Kartendaten empfängt und basierend auf den Kartendaten den Kartenträger-Vordruck-Anleger steuert, um einen vorbestimmten Kartenträger-Vordruck bereitzustellen, die von der zweiten Leseeinrichtung die erste Identifikationsmarkierung und die zweite Identifikationsmarkierung empfängt, um zu bestimmen, ob die auf dem Kartenträger-Vordruck aufgedruckten Daten und der Kartenträger-Vordruck zusammengehören, und die die zweite Leseeinrichtung steuert, um den Kartenträger zum Zusammenführen mit der Karte bereitzustellen, falls die Daten und der Kartenträger-Vordruck zusammengehören.

Der Vorteil der vorliegenden Erfindung besteht darin, dass hier durch eine Steigerung der Verarbeitungsleistung, der Verarbeitungssicherheit und der Verarbeitungsflexibilität ermöglicht wird, da durch das Karten-Versandsystem nunmehr selbst der passende Kartenträger-Vordruck ausgewählt wird, basierend auf den von den Karten ausgelesenen Kartendaten. Dies hat den weiteren Vorteil gegenüber den herkömmlichen Systemen, dass eine Reduzierung des Bedienaufwandes möglich ist, da die Anforderungen an das Anlegen des Kartenträger-Vordrucks an das System hinsichtlich der Reihenfolge und der Art der Vordrucke reduziert sind. Ferner fällt die visuelle Kontrolle weg, da vor dem Bereitstellen der Kartenträger an den Applizierer nochmals überprüft wird, ob aufgedruckter Text und Kartenträger-Vordruck tatsächlich zusammengehören. Ein weiterer Vorteil ist darin zu sehen, dass die Zugehörigkeit von Formular und Druck, sowie in einem späteren Verarbeitungsschritt auch der Karte automatisch sichergestellt wird. Ferner wird durch den erfindungsgemäßen Ansatz sichergestellt, dass das Ausgangsprodukt, also Träger mit Informationen und Karte am Ende des Prozesses 100%ig zusammenpassen.

Die erfindungsgemäße Vorrichtung und das erfindungsgemäße Verfahren verarbeiten die Kartendaten und die Identifikationsmarkierungen, wobei es sich hierbei um an sich bekannte Kartendaten oder Identifikationsmarkierungen handeln kann, wie beispielsweise einer Identifikationsnummer, die von der Karte gelesen wird, mittels der auf die Datenbank zugegriffen wird, und die sich ebenfalls auf dem Kartenträger-Vordruck befindet, sowie während des Druckens des Textes auf den Kartenträger-Vordruck als Druckidentifikation (zweite Identifikationsmarkierung) aufgedruckt wird.

Alternativ können auch andere Daten, z.B. Kundennummer oder Kundendaten von der Karte als Kartendaten erfasst werden, wobei die Erfassung das Auslesen eines Speicherelements der Karte oder eine OCR-Lesung der Karte umfassen kann.

Ist die Verwendung der Identifikationsnummer der Karte im Klartext nicht erwünscht, z. B. aus Sicherheitsgründen, so können die erforderlichen Markierungen auch verschlüsselt, z. B. als Barcode auf dem Kartenträger-Vordruck und dem Kartenträger bereitgestellt werden. Ist es nicht erwünscht, die Identifikationsmarkierung des Kartenträgers, im Klartext oder verschlüsselt, auf dem Kartenträger-Vordruck und dem Kartenträger aufzubringen, z. B. aus Sicherheitsüberlegungen, so kann beispielsweise unter Ausnutzung der Ansätze, wie sie in den eingangs genannten Dokumenten beschrieben sind, vorgesehen sein, anstelle der Kartendaten einer Karte über die Datenbank eine entsprechende Markierung auszuwählen, die sich auf dem Kartenträger-Vordruck und dem Kartenträger befindet, die jedoch nicht in eindeutiger Weise auf die Kartendaten zurückbezogen werden kann. Beispielsweise können mittels des Druckers Druckauftragsnummern vorgesehen sein, welche in der Verarbeitungseinheit bei Empfang der Kartendaten ausgewählt werden. Ferner kann über die Verarbeitungseinrichtung basierend auf den empfangenen Kartendaten der Karte eine eindeutige Markierung ausgewählt werden, mittels der ein Kartenträger-Vordruck identifiziert werden kann, wobei auch diese eindeutig ausgewählte Codierung keinen Rückschluss auf die Kartendaten der Karte zulässt.

Gemäß einem ersten bevorzugten Ausführungsbeispiel der vorliegenden Erfindung arbeitet die erfindungsgemäße Vorrichtung und das erfindungsgemäße Verfahren derart, dass zunächst eine Mehrzahl von Kartenträger-Vordrucken bereitgestellt werden, beispielsweise in einem Kartenträger-Vordruck-Magazin, welches die Mehrzahl von Kartenträger-Vordrucken hält. Die Mehrzahl von Kartenträger-Vordrucken sind zumindest in eine erste Gruppe von Kartenträger-Vordrucken eines ersten Typs und in eine zweite Gruppe von Kartenträger-Vordrucken eines zweiten Typs unterteilt, wobei jeder Kartenträger-Vordruck eine erste Identifikationsmarkierung entsprechend seines Typs umfasst. Basierend auf den von der Karte ausgelesenen Kartendaten wird, beispielsweise unter Steuerung der Verarbeitungseinheit, ein Kartenträger-Vordruck aus dem Magazin ausgewählt und bereitgestellt.

Bei einem weiteren Ausführungsbeispiel arbeitet das erfindungsgemäße Verfahren und die erfindungsgemäße Vorrichtung derart, dass der Kartenträger-Vordruck-Anleger einen Vorrat von unbedruckten Blättern aufweist, die einem Drucker bereitgestellt werden. Der Drucker empfängt von der Verarbeitungseinrichtung die mittels der Kartendaten ausgewählten Daten zur Erzeugung eines Kartenträger-Vordrucks sowie eine diesem Vordruck zugeordnete Identifikationsmarkierung. Die so erzeugten Kartenträger-Vordrucke werden dann der weiteren Verarbeitung bereitgestellt.

Gemäß einem weiteren Ausführungsbeispiel, kann vorgesehen sein, dass nach dem Bereitstellen der Kartenträger-Vordrucke eine Erfassung der ersten Identifikationsmarkierung derselben erfolgt, um so nach dem Bereitstellen, basierend auf den Kartendaten und der ersten Identifikationsmarkierung, zu prüfen, ob der bereitgestellte Kartenträger-Vordruck und die Karten zusammengehören. Der Vorteil dieser Vorgehensweise besteht darin, dass hier bereits frühzeitig fehlerhaft ausgewählte Kartenträger-Vordrucke aus dem System ausgesteuert werden können, so dass hierauf durch das System noch in geeignetem Umfang reagiert werden kann, z. B. durch Erzeugung oder Bereitstellen eines korrekten Kartenträger-Vordrucks und gleichzeitigem Zurückhalten der zu applizierenden Karte.

Gemäß einem weiteren bevorzugten Ausführungsbeispiel der vorliegenden Erfindung umfasst das erfindungsgemäße System zusätzlich einen Applizierer, der nach dem Bereitstellen der Karte basierend auf den Kartendaten und der zweiten Identifikationsmarkierung feststellt, ob die Karte und der Kartenträger zusammengehören. Wird festgestellt, dass die Karte und der Kartenträger zusammengehören, so werden diese zusammengeführt und verbunden. Anschließend kann vorgesehen sein, den Kartenträger zu falzen, und/oder dem Kartenträger Beilagen zuzuordnen, und/oder den Kartenträger zu kuvertieren. Alternativ kann vorgesehen sein, dem Kartenträger Beilagen zuzuordnen und/oder den Kartenträger zu falzen und zu verschweißen um so das versandfertige Produkt fertigzustellen.

Vorzugsweise ist die Karte eine Kunststoffkarte (z.B. CR-80), wie sie heute z.B. bei Kreditkarten oder ähnlichem eingesetzt wird. Die vorliegende Erfindung ist jedoch nicht auf solche Kunststoffkarten beschränkt. Tatsächlich können beliebige Karten gehandhabt werden, wobei "Karte" im Sinne der vorliegenden Erfindung nicht nur Kunststoffkarten bedeutet, sondern auch andere Karten oder kartenähnliche Elemente oder Datenträger umfasst, z.B. Mini-Disks oder Mini-CDs, SIMM-Karten, etc.

Bevorzugte Weiterbildungen der Erfindung sind in den Unteransprüchen definiert.

Nachfolgend werden anhand der beiliegenden Zeichnungen bevorzugte Ausführungsbeispiele der vorliegenden Anmeldung näher erläutert. Es zeigen:
- Fig. 1: eine schematische Darstellung der erfindungsgemäßen Vorrichtung gemäß einem ersten bevorzugten Ausführungsbeispiel;
- Fig. 2: ein Ausführungsbeispiel der erfindungsgemäßen Vorrichtung;
- Fig. 3A bis C: Darstellungen von Kartenträger-Vordrucken, die von einem Anleger gemäß einem zweiten bevorzugten Ausführungsbeispiel der vorliegenden Erfindung erzeugt und bereitgestellt werden, und
- Fig. 4: eine schematische Darstellung einer herkömmlichen Vorrichtung zum Bereitstellen von Kartenträgern.

Anhand der nachfolgenden Figuren werden bevorzugte Ausführungsbeispiele näher erläutert, wobei in den Figuren ähnliche oder gleichwirkende Elemente mit ähnlichen oder gleichen Bezugszeichen versehen sind.

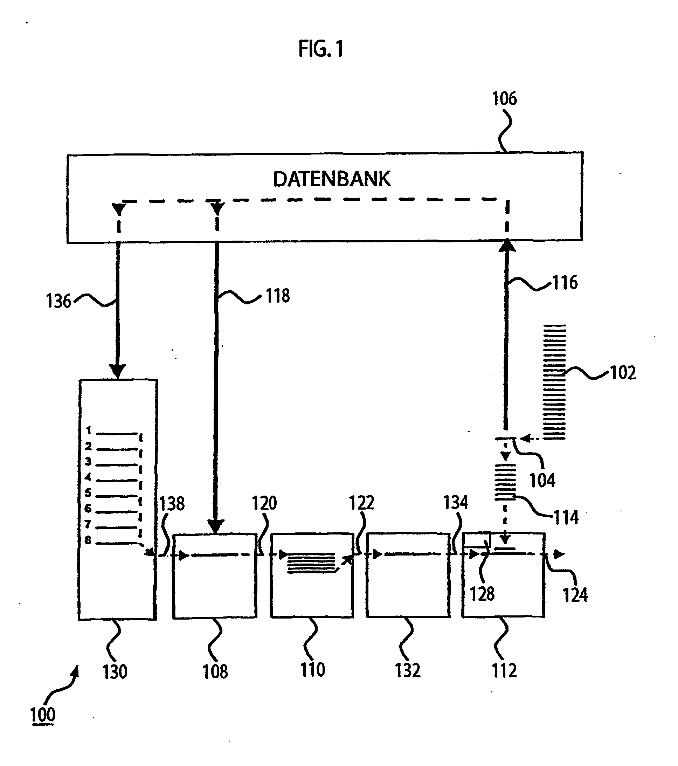

In Fig. 1 ist eine schematische Darstellung eines ersten bevorzugten Ausführungsbeispiels des erfindungsgemäßen Systems 100 gezeigt. Ähnlich wie das herkömmliche System, umfasst das erfindungsgemäße System ein Kartenträgermagazin 102, welches eine Kunststoffkarte oder eine Mehrzahl von Kunststoffkarten enthält. Die Kunststoffkarten können in beliebiger Reihenfolge in dem Magazin vorgesehen sein. Ferner ist eine Leseeinrichtung 104 vorgesehen, welche von einer Kunststoffkarte, die von dem Magazin 102 empfangen wird, Kartendaten liest. Die Kartendaten sind in einem Speicherelement der Kunststoffkarte, z. B. in einem Magnetstreifen oder in einem Chip, gespeichert und umfassen z.B. eine Kundennummer, eine Identifikationsnummer oder allgemein Kundendaten. Anstelle von Karte mit Speicherelementen können auch Karten ohne solche Speicherelemente vorgesehen sein, wobei die Kartendaten hier auf den Karten im Klartext und/oder verschlüsselt aufgebracht sind und beispielsweise durch eine OCR-Lesung erfasst werden. Auch bei Karten mit Speicherelementen kann zusätzlich oder alternativ auf Kartendaten auf der Karte durch eine OCR-Lesung zugegriffen werden. Das System umfasst ferner eine Verarbeitungseinrichtung 106, einen Drucker 108, einen Kartenträgerpuffer 110, einen Applizierer 112 sowie einen Kunststoffkartenpuffer 114.

Die von der Leseeinrichtung 104 erfassten Kartendaten werden der Datenverarbeitungseinrichtung 106 bereitgestellt, wie dies durch den Pfeil 116 angedeutet ist. Mittels der Kartendaten wird auf eine in der Datenverarbeitungseinrichtung 106 angeordnete Datenbank zugegriffen, die für die Erzeugung des Kartenträgers erforderliche Druckdaten, z.B. Adresse und Anschreiben, einem Drucker 108 bereitstellt, wie dies durch den Pfeil 118 angedeutet ist. Der Drucker bedruckt die Kartenträger-Vordrucke mit den bereitgestellten Daten und einer ersten Identifikationsmarkierung und gibt diese an den Kartenträgerpuffer 110 aus, wie dies bei 120 gezeigt ist. Der Kartenträgerpuffer 110 stellt die gepufferten Kartenträger an einem Ausgang bereit, wie dies bei 122 gezeigt ist.

Der Applizierer 112 ist vorgesehen, um die von dem Kartenträgerpuffer 110 empfangenen Kartenträger und die von Kunststoffkartenpuffer 114 empfangenen Kunststoffkarten miteinander zu verbinden, und einer weiteren Verarbeitung bereitzustellen, wie z. B. dem Hinzufügen von Beilagen, dem Kuvertieren, oder einer sonstigen Nachverarbeitung, wie dies durch den Pfeil 124 angedeutet ist. Hierzu umfasst der Applizierer 112 eine weitere Leseeinrichtung 128, die in Fig. 1 schematisch angedeutet ist, und die von dem Kartenträger gelesene erste Identifikationsmarkierung, welche den auf dem Kartenträger-Vordruck aufgedruckten Daten zugeordnet ist, liest. Der Applizierer ist hierfür mit der Datenverarbeitungseinrichtung 106 verbunden, um basierend auf der gelesenen Identifikationsmarkierung und den Kartendaten zu bestimmen ob die Kunststoffkarte und der Kartenträger, welche zur Verbindung anstehen, tatsächlich zu verbinden sind oder nicht. Wird eine Übereinstimmung festgestellt, so wird die Kunststoffkarte an dem Kartenträger befestigt und der weiteren Verarbeitung zugeführt. Andernfalls wird eine Verbindung nicht durchgeführt, und die Kunststoffkarte und der Kartenträger werden aus dem System ausgesteuert.

Bei einem bevorzugten Ausführungsbeispiel des Systems kann der Applizierer ohne Leseeinrichtung ausgestaltet sein. Bei diesem Ausführungsbeispiel werden die von der Kunststoffkarte gelesenen Kartendaten in dem System zusammen mit der Kunststoffkarte durch das System bewegt, so dass am Applizierer zusammen mit der Kunststoffkarte deren zugeordnete Kartendaten ankommen. Ebenso wird die in der Leseeinrichtung 132 gelesene Identifikationsmarkierung des Kartenträgeres zusammen mit demselben durch das System geschickt, so dass am Applizierer zusammen mit dem Kartenträger dessen zugeordnete Identifikationsmarkierung ankommt. Die erhaltenen Kartendaten und die Identifikationsmarkierung werden dann verglichen, d.h. basierend auf den Kartendaten und der Identifikationsmarkierung wird bestimmt, ob die Karte und Träger zusammengehören, und abhängig von dem Ergebnis des Vergleichs werden Träger und Karte verbunden oder nicht.

Bei dem in Fig. 1 dargestellten Ausführungsbeispiel der erfindungsgemäßen Vorrichtung ist zusätzlich ein Magazin 130 vorgesehen, welches eine Mehrzahl von Kartenträger-Vordrucken enthält, wobei das Magazin acht Gruppen von Kartenträger-Vordrucken unterschiedlichen Typs enthält. Die Unterschiede hinsichtlich des Typs können beispielsweise darin liegen, dass das Versandsystem 100 Kunststoffkarten von unterschiedlichen Herausgebern verarbeitet, was insbesondere bei kleineren Mengen der Fall sein wird. Alternativ kann es sich hier auch um Kartenträger-Vordrucke eines Herausgebers handeln, der jedoch für unterschiedliche Karten unterschiedliche Vordrucke verwenden möchte. Um die entsprechenden Kartenträger-Vordrucke eines Typs zu identifizieren, sind diese mit entsprechenden Identifikationsmarkierungen versehen, anhand der ein Kartenträger-Vordruck aus dem Magazin ausgewählt werden kann.

Das System umfasst ferner eine Leseeinrichtung 132 zwischen dem Kartenträgerpuffer 110 und dem Applizierer 112, in der die dem Kartenträger-Vordruck zugeordnete Identifikationsmarkierung und die durch das Aufdrucken der Daten aufgedruckte, den Daten zugeordnete Identifikationsmarkierung gelesen wird und verglichen wird, um festzustellen ob auf dem Kartenträger-Vordruck auch die richtigen Daten aufgedruckt werden, bzw. ob der Vordruck zu den aufgedruckten Daten passt. Wird eine Übereinstimmung festgestellt, so wird der Kartenträger, also der mit den Daten versehene Kartenträger-Vordruck, an den Applizierer 112 ausgegeben, wie dies durch den Pfeil 134 angedeutet ist. Andernfalls wird der Kartenträger aus dem System 100 ausgesteuert.

In der Datenverarbeitungseinrichtung 106 wird, wie oben schon erwähnt, mittels der von den Kunststoffkarten gelesenen Kartendaten auf die Datenbank zugegriffen, wobei jedoch bei dem erfindungsgemäßen Verfahren und der erfindungsgemäßen Vorrichtung zusätzlich zu den Druckdaten zur Erzeugung des Kartenträgertextes auch noch ein Signal zur Auswahl eines Kartenträger-Vordrucks aus dem Magazin 130 bereitgestellt wird, welches dann dem Magazin 130 bereitgestellt wird, wie dies durch den Pfeil 136 angedeutet ist. Abhängig von der Ausgestaltung des Magazins 130 kann vorgesehen sein, dass in der Datenbank für eine Kunststoffkarte ein entsprechendes Fach in dem Magazin 130 abgelegt ist, und die entsprechende Fachauswahlidentifikation wird dann dem Magazin 130 bereitgestellt. Alternativ ist es jedoch auch möglich, eine geeignete Auswahlmarkierung aus der Datenbank auszulesen und diese an das Magazin 130 anzulegen, welches, z. B. beim Beschicken desselben mit den unterschiedlichen Kartenträger-Vordrucken die den jeweiligen Kartenträger-Vordrucken zugeordneten Identifikationsmarkierungen erfasst um bei Empfang einer entsprechenden Auswahlmarkierung von der Datenverarbeitungseinrichtung 106 einen entsprechenden Vordruck aus dem Magazin 130 auszuwählen.

Ein ausgewählter Kartenträger-Vordruck wird vom Magazin 130 dem Drucker 108 zur Erzeugung des Kartenträgers durch Bedrucken mit den ebenfalls bereitgestellten Druckdaten bereitgestellt, wie dies durch den Pfeil 138 angedeutet ist.

Die Funktionsweise der in Fig. 1 gezeigten Vorrichtung ist derart, dass zunächst aus dem Magazin 102 eine Kunststoffkarte in der Leseeinrichtung 104 empfangen wird, und dort der Kunststoffkarte zugeordnete Kartendaten von der Karte oder aus deren Speichereinheit, z. B. Magnetstreifen oder Chip, ausgelesen werden und der Datenverarbeitungseinrichtung 106 bereitgestellt werden. Basierend auf den empfangenen Daten, z.B. einer Identifikationsnummer, veranlasst die Datenverarbeitungseinrichtung 106 zum einen den Abzug eines entsprechenden Kartenträger-Vordrucks aus dem Kartenträger-Vordruck-Magazin 130 sowie die Ansteuerung des Druckers 110, um den ausgewählten Kartenträger-Vordruck entsprechend aufzubereiten. Basierend auf diesen Daten wird dann im Drucker 108 der Kartenträger durch Bedrucken des ausgewählten Kartenträger-Vordrucks mit den bereitgestellten Daten erzeugt. In der Leseeinrichtung 132 erfolgt ein Vergleich der Identifikationsnummer des Kartenträger-Vordrucks mit einer Identifikationsnummer, die den aufgedruckten Daten zugeordnet ist. Ist dieser Vergleich erfolgreich, stimmen also Vordruck und Daten überein, so wird der Kartenträger dem Applizierer 112 zugeführt, wo auf die oben beschriebene Art und Weise nochmals die Identifikationsnummer der Kunststoffkarte sowie die Identifikationsnummer des Kartenträgers, entweder die Identifikationsnummer des Vordrucks oder die den Daten zugeordnete Identifikationsnummer, verglichen werden, um bei Übereinstimmung ein Verbinden von Kunststoffkarte und Kartenträger zu bewirken.

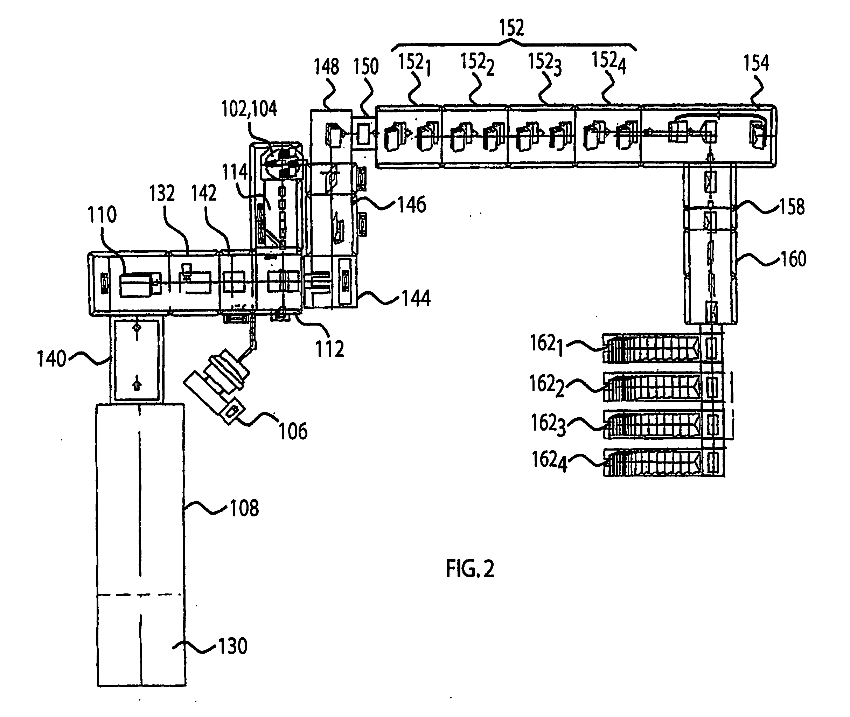

In Fig. 2 ist ein bevorzugtes Ausführungsbeispiel der erfindungsgemäßen Vorrichtung dargestellt, nämlich ein Versandsystem für Kunststoffkarten, welches die applizierten Kunststoffkarten zum Versand fertigstellt. Elemente, die bereits anhand der Fig. 1 beschrieben wurden, sind in Fig. 2 mit den gleichen Bezugszeichen versehen.

Wie zu erkennen ist, ist hier der Drucker 108 vorgesehen, der in einem Abschnitt gleichzeitig das Vordruck-Magazin enthält. Über eine Übergabestation 140 werden die von dem Drucker 108 erzeugten Kartenträger dem Kartenträgerpuffer 110 bereitgestellt. Von dort werden die Kartenträger der Leseeinrichtung 132 bereitgestellt, welche den oben beschriebenen Vergleich von Datenidentifikationsmarkierungen und Vordruckidentifikationsmarkierungen durchführt. Über eine Übergabestation 142 werden die überprüften Kartenträger dem Applizierer 112 bereitgestellt. Dem Applizierer werden ferner von der kombinierten Magazin/Lese-Einrichtung 102, 104 für die Kunststoffkarten über den Puffer 114 die zur Applizierung vorgesehene Kunststoffkarte bzw. die Mehrzahl von vorgesehenen Kunststoffkarten bereitgestellt. Im Applizierer 112 erfolgt die entsprechende Lesung der Kartendaten und der Identifikationsmarkierungen vor dem Applizieren, auf die oben beschriebene Art und Weise. Über eine Umlenkeinrichtung 144 wird der Kartenträger mit der darauf angebrachten Kunststoffkarte bzw. mit der Mehrzahl von darauf angebrachten Kunststoffkarten einem Falzwerk 146 bereitgestellt, und die gefalzten Kartenträger werden in einem Puffer 148 abgelegt. Über eine Übergabeeinheit 150 werden die im Puffer 148 abgelegten, gefalzten Kartenträger einem Beilagenanleger 152 bereitgestellt, der bei dem dargestellten Ausführungsbeispiel vier Stationen 152₁ bis 152₄ umfasst, in der jeweils zwei Beilagen dem bereitgestellten Kartenträger zugeordnet werden können. Selbstverständlich kann der Kartenträger den Beilagenanleger 152 auch durchlaufen, um nur an bestimmten Stationen eine Beilage zu empfangen, oder um überhaupt keine Beilage zu empfangen. Von dem Beilagen-Anleger wird der gefalzte Kartenträger mit den gegebenenfalls vorhandenen Beilagen einem Kuvertierer 154 bereitgestellt, und der Kartenträger für die gegebenenfalls vorhandenen Beilagen werden in ein Kuvert eingebracht. Die Kuverts werden über eine Übergabestation 158 einer Wendestation 160 bereitgestellt, in der die Kuverts gewendet werden. Von der Wendestation 160 werden die Kuverts an eine Mehrzahl von Ablagen 162₁ bis 162₄ abgegeben.

Alternativ zu der oben beschriebenen Kuvertiereinheit 154 kann auch vorgesehen sein, den gefalzten Kartenträger an den Seiten zu verschweißen und anschließend mit den erforderlichen Adressinformationen zu bedrucken, sofern diese nicht bereits im Drucker 108 aufgebracht wurden, um so bereits hierdurch die versandfertige Einheit fertigzustellen. Bei einer weiteren Ausgestaltung kann vorgesehen sein, den Kartenträger lediglich zu verschweißen und auf einer Ablage abzulegen.

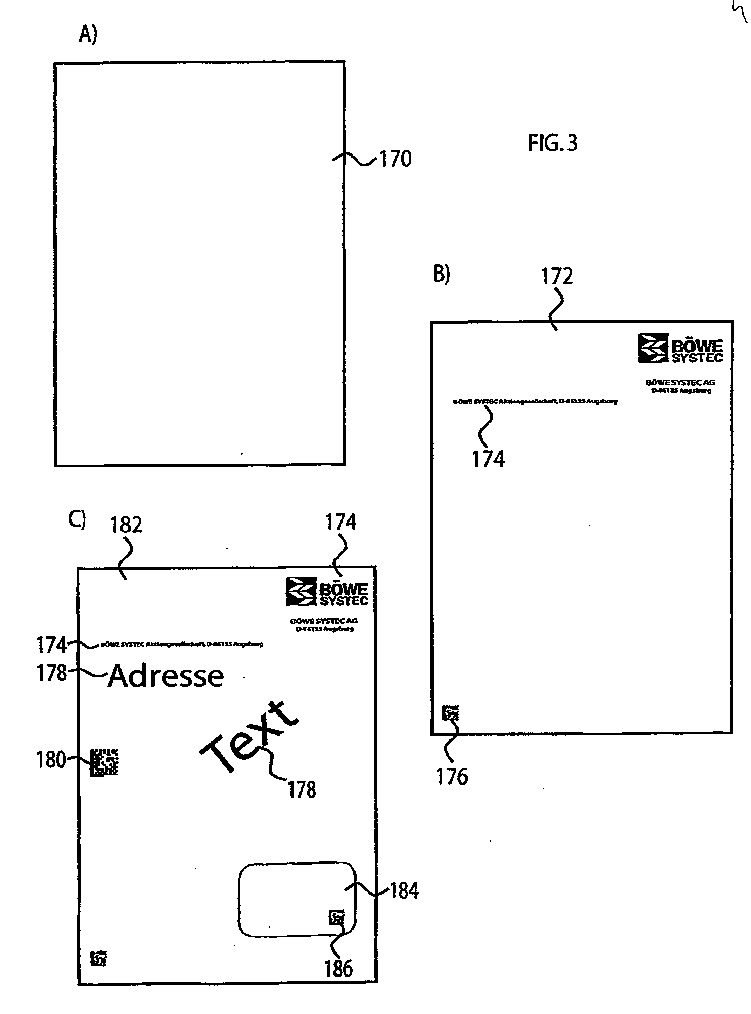

Nachfolgend wird anhand der Fig. 3 unter Bezugnahme auf einen Kartenträger eine weitere, alternative Ausführungsform des erfindungsgemäßen Verfahrens und der erfindungsgemäßen Vorrichtung erläutert. Der Aufbau der Vorrichtung entspricht im wesentlichen dem der Fig. 1, wobei jedoch anstelle des Magazins 130 ein Vorrat vorgesehen ist, in dem eine Mehrzahl von unbedruckten Blättern vorgesehen sind, wie es in Fig. 3A bei 170 gezeigt ist. Das Blatt 170 wird unter Steuerung der von der Datenbank empfangenen Daten mit Informationen betreffend den Herausgeber der Kunststoffkarte, z. B. dem Briefkopf desselben, sowie mit einer entsprechenden Informationsmarkierung versehen und bereitgestellt, wie dies in Fig. 3B gezeigt ist. Hier ist der fertiggestellte Kartenträger-Vordruck 172, z. B. ein Briefkopf, zu sehen, der neben den Informationen 174, welche beispielsweise den Kartenherausgeber identifizieren, eine den Kartenträger-Vordruck identifizierende Identifikationsmarkierung 176 aufweist. Der so bereitgestellte Kartenträger-Vordruck 172 wird der weiteren Verarbeitung dem System zugeführt. In Fig. 3C ist der Kartenträger und die darauf befestigte Kunststoffkarte nach dem Applizieren derselben am Ausgang des Applizierers 112 dargestellt. Der dem System bereitgestellte Kartenträger-Vordruck 172 wurde in dem Drucker 108 auf die oben beschriebene Art und Weise mit den Daten für den Kunststoffkartenempfänger versehen, die in Fig. 3C mit 178 bezeichnet sind, und beispielsweise einer Adresse des Kunststoffkartenempfängers sowie ein entsprechendes Anschreiben umfassen. Ferner wurde im Zuge der Erstellung des Anschreibens im Drucker 108 eine den aufgedruckten Daten 178 zugeordnete zweite Identifikationsmarkierung 180 aufgedruckt. Hierdurch wurde der Kartenträger 182 durch Bedrucken des Kartenträger-Vordrucks 172 mit den Daten 178 und der Identifikationsmarkierung 180 erzeugt. Auf die oben beschriebene Art und Weise erfolgte in der Leseeinrichtung 132 ein Vergleich der Identifikationsmarkierungen 176 und 180 um festzustellen, ob Kartenträger-Vordruck 172 und darauf aufgedruckte Daten 178 zusammenpassen. Nachdem dies festgestellt wurde, wurde im Applizierer 112 die Kunststoffkarte 184 an dem Kartenträger 182befestigt, wobei die Kunststoffkarte 184 die in Fig. 3C schematisch angedeutete Markierung/Daten 186, z. B. in ihrem Magnetstreifen oder Chipelement, speichert. Auf die oben beschriebene Art und Weise wurde vor dem Verbinden der Kunststoffkarte 184 mit dem Kartenträger 182 entweder die Identifikationsmarkierung 180 und die Identifikationsmarkierung 186 oder die Identifikationsmarkierung 176 und die Markierung/Daten 186 der Kunststoffkarte verglichen, und nach erfolgreichem Vergleich die Kunststoffkarte 184 an dem Kartenträger 182 befestigt.

Bei dem anhand der Fig. 1 dargestellten Ausführungsbeispiel würde anders als bei dem gerade beschriebenen Ausführungsbeispiel in dem Magazin 130 in einem der Fächer der Kartenträger-Vordruck 172 bereits abgelegt sein, mit der entsprechenden Identifikationsmarkierung 176, und die gerade beschriebenen weiteren Schritte würden genauso ausgeführt.

Der Vorteil des oben beschriebenen erfindungsgemäßen Verfahrens besteht darin, dass bei dem anhand der Fig. 1 dargestellten Ausführungsbeispiel in dem Kartenmagazin 130 verschiedene Kartentypen in beliebiger Folge angeordnet sein können. Jedem Kartentyp wird auf die oben beschriebene Art und Weise durch Auswahl aus dem Magazin 130 und Bedrucken desselben im Drucker 108 ein entsprechender Kartenträger zugeordnet. Die Kartenträger-Vordrucke umfassen zusätzlich eine Identifikationsnummer, beispielsweise eine Formular-Identifikationsnummer.

Mit dem Lesen jeder Karte bewirkt die Datenbank den Abruf eines entsprechenden Kartenträger-Vordrucks und bereitet dessen Druck vor. Nach dem Drucken erfolgt der oben beschriebene Lesevergleich zur Feststellung, ob Formular und Aufdruck zusammengehören, und anschließend wird nochmals überprüft, ob Karte und Träger zusammengehören.

Durch diese Vorgehensweise ist sichergestellt, dass
Formular-Druck-Karte(n)
automatisch auf ihre Zusammengehörigkeit geprüft werden und im Fehlerfall der Kartenträger bzw. die Karte(n) ausgesteuert werden kann.

Die oben in der Beschreibungseinleitung näher beschriebenen Beschränkungen der im Stand der Technik bekannten Systeme werden somit durch das erfindungsgemäße Verfahren und die erfindungsgemäße Vorrichtung auf vorteilhafte Weise ausgeräumt.

Bei der obigen Beschreibung wurde ein Vergleich der Kartendaten von der Karte und der Identifikationsmarkierung beschrieben. Dieser Vergleich erfolgt vorzugsweise in der Verarbeitungseinheit und umfasst basierend auf den Kartendaten und den Identifikationsmarkierungen die Feststellung, ob die betrachtete Karte und der Kartenträger einander zugeordnet sind, also zusammengehören oder nicht.

Die oben beschriebenen ersten und zweiten Identifikationsmarkierungen können gleich oder unterschiedlich sein, sofern eine entsprechende Zuordnung der selben zueinander und zu den Kartendaten möglich ist.

## Patentansprüche

1. Verfahren zum Bereitstellen eines Kartenträgers (182) für eine Zusammenführung mit einer Karte (184), mit folgenden Schritten:
(a) Bereitstellen der Karte (184);
(b) Erfassen von Kartendaten (186) von der Karte (184) ;
(c) basierend auf den Kartendaten (186), Bereitstellen eines Kartenträger-Vordrucks (172), der eine erste Identifikationsmarkierung (176) aufweist;
(d) basierend auf den Kartendaten (186), Bedrucken des Kartenträger-Vordrucks (172) mit vorbestimmten Daten (176) und einer zweiten, den vorbestimmten Daten (178) zugeordneten Identifikationsmarkierung (180), um den Kartenträger (182) zu bilden;
(e) Erfassen der ersten Identifikationsmarkierung (176) und der zweiten Identifikationsmarkierung (180) von dem Kartenträger (182);
(f) basierend auf der ersten Identifikationsmarkierung (176) und auf der zweiten Identifikationsmarkierung (180), Bestimmen, ob die aufgedruckten Daten (178) und der Kartenträger-Vordruck (172) zusammengehören; und
(g) falls die Zusammengehörigkeit von Daten (178) und Kartenträger-Vordruck (172) bestimmt wird, Bereitstellen des Kartenträgers (182) zur Zusammenführung mit der Karte (184).

2. Verfahren nach Anspruch 1, bei dem der Schritt (c) folgende Schritte umfasst:
(c.1.) Bereitstellen einer Mehrzahl von Kartenträger-Vordrucken (172), wobei die Mehrzahl von Kartenträger-Vordrucken zumindest eine erste Gruppe von Kartenträger-Vordrucken eines ersten Typs und eine zweite Gruppe von Kartenträger-Vordrucken eines zweiten Typs aufweist, wobei jeder Kartenträger-Vordruck (172) eine erste Identifikationsmarkierung (176) entsprechend seines Typs aufweist;
(c.2.) basierend auf den Kartendaten (186), Auswählen eines Kartenträger-Vordrucks (172) aus der Mehrzahl der Kartenträger-Vordrucke; und
(c.3.) Bereitstellen des ausgewählten Kartenträger-Vordrucks (172).

3. Verfahren nach Anspruch 1, bei dem der Schritt (c) folgende Schritte aufweist:
(c.1.) Bereitstellen eines unbedruckten Blattes (170);
(c.2.) basierend auf den Kartendaten (186), Bedrucken des Blattes (170) mit vorbestimmten Daten (174) und mit der ersten Identifikationsmarkierung (176), um den Kartenträger-Vordruck (172) zu erzeugen; und
(c.3.) Bereitstellen des erzeugten Kartenträger-Vordrucks (172).

4. Verfahren nach einem der Ansprüche 1 bis 3, bei dem die Schritte (c) und (d) das Auslesen einer Datenbank (106) basierend auf den Kartendaten (186) umfasst, um den Kartenträger-Vordruck (172) und Daten (174) auszuwählen.

5. Verfahren nach einem der Ansprüche 1 bis 4, das nach dem Schritt (c) und vor dem Schritt (d) folgende Schritte umfasst:
Erfassen der ersten Identifikationsmarkierung (176) von dem bereitgestellten Kartenträger-Vordruck (172); und
basierend auf den Kartendaten (186) und der ersten Identifikationsmarkierung (176), Bestimmen, ob der bereitgestellte Kartenträger-Vordruck (172) und die Karte (184) zusammengehören.

6. Verfahren nach einem der Ansprüche 1 bis 5, das nach dem Schritt (g) folgende Schritte aufweist:
basierend auf den Kartendaten (186) und der ersten Identifikationsmarkierung (176) oder der zweiten Identifikationsmarkierung (180), Bestimmen, ob die Karte (184) und der Kartenträger (182) zusammengehören; und
falls der Kartenträger (182) und die Karte (184) zusammengehören, Verbinden der Karte (184) mit dem Kartenträger (182).

7. Verfahren nach einem der Ansprüche 1 bis 5, das nach dem Schritt (g) folgende Schritte aufweist:
basierend auf den Kartendaten (186) und der ersten Identifikationsmarkierung (176) und der zweiten Identifikationsmarkierung (180), Bestimmen, ob die Karte (184) und der Kartenträger (182) zusammengehören; und
falls der Kartenträger (182) und die Karte (184) zusammengehören, Verbinden der Karte (184) mit dem Kartenträger (182).

8. Verfahren nach einem der Ansprüche 1 bis 7, bei dem eine Mehrzahl von Karten (186) vorgesehen sind, wobei die Karten im Schritt (b) aufeinanderfolgend gelesen werden, wobei die Karten nach dem Schritt (b) gepuffert werden (104), und wobei die für die Mehrzahl von Karten erzeugten Kartenträger (182) nach dem Schritt (d) gepuffert werden (110).

9. Verfahren nach einem der Ansprüche 1 bis 8, bei dem die vorbestimmten Daten Information über einen Kartenempfänger und/oder Information über einen Kartenherausgeber umfassen.

10. Verfahren nach einem der Ansprüche 7 bis 9, mit folgenden Schritten nach dem Verbinden von Karte (184) und Kartenträger (182):
Falzen (146) des Kartenträgers (182), und/oder
Zuordnen von Beilagen (152) zu dem Kartenträger (182), und/oder
Kuvertieren des Kartenträgers (154).

11. Verfahren nach einem der Ansprüche 7 bis 9, mit folgenden Schritten nach dem Verbinden von Karte (184) und Kartenträger (182):
Zuordnen von Beilagen zu dem Kartenträger, und/oder
Falzen und/oder Verschweißen des Kartenträgers.

12. Verfahren nach einem der Ansprüche 7 bis 11, bei dem einem Kartenträger (182) eine Mehrzahl von Karten zugeordnet ist und mit demselben verbunden wird.

13. Vorrichtung zum Bereitstellen eines Kartenträgers (182) für eine Zusammenführung mit einer Karte (184), mit
einem Kartenmagazin (102), zum Halten einer Karte oder einer Mehrzahl von Karten;
einer Leseeinrichtung (104), zum Lesen von Kartendaten (186) von einer Karte (184);
einem Kartenträger-Vordruck-Anleger (130), der einen Kartenträger-Vordruck (172) mit einer ersten Identifikationsmarkierung (176) bereitstellt;
einem Drucker (108), der mit dem Kartenträger-Vordruck-Anleger (130) wirksam verbunden ist, um von demselben einen Kartenträger-Vordruck (172) zu empfangen und mit vorbestimmten Daten (178) und einer zweiten, den vorbestimmten Daten (178) zugeordneten Identifikationsmarkierung (180) zu versehen, um den Kartenträger (182) zu erzeugen;
einer zweiten Leseeinrichtung (172) zum Lesen der ersten Identifikationsmarkierung (176) und der zweiten Identifikationsmarkierung (180) von dem Kartenträger (182); und
einer Verarbeitungseinrichtung (106), die angepasst ist, um von der ersten Leseeinrichtung (104) die Kartendaten (186) zu empfangen und basierend auf den Kartendaten (186) den Kartenträger-Vordruck-Anleger (130) zu steuern, um einen vorbestimmten Kartenträger-Vordruck (172) bereitzustellen, um von der zweiten Leseeinrichtung (132) die erste Identifikationsmarkierung (176) und die zweite Identifikationsmarkierung (180) zu empfangen, um zu bestimmen, ob die auf dem Kartenträger-Vordruck (172) aufgedruckten Daten (178) und der Kartenträger-Vordruck (172) zusammengehören, und um die zweite Leseeinrichtung (132) zu steuern, um den Kartenträger (182) zum Zusammenführen mit der Karte (184) bereitzustellen, falls die Daten (178) und der Kartenträger-Vordruck (172) zusammengehören.

14. Vorrichtung nach Anspruch 13, bei der der Kartenträger-Vordruck-Anleger folgende Merkmale umfasst:
ein Kartenträger-Vordruck-Magazin (130), um eine Mehrzahl von Kartenträger-Vordrucken (172) unterschiedlichen Typs zu erhalten, wobei jeder Kartenträger-Vordruck eine erste Identifikationsmarkierung (176) entsprechend seines Typs aufweist; und
einem Anleger, um einen Kartenträger-Vordruck (172) bereitzustellen, der unter der Steuerung der Verarbeitungseinrichtung (106) aus dem Magazin (130) ausgewählt ist.

15. Vorrichtung nach Anspruch 13, bei der der Kartenträger-Vordruck-Anleger folgende Merkmale umfasst:
einen Drucker, der angepasst ist, um ein unbedrucktes Blatt (170) zu empfangen und unter Steuerung der Verarbeitungseinrichtung (106) mit vorbestimmten Daten (174) und der ersten Identifikationsmarkierung (176) zu bedrucken, um den Kartenträger-Vordruck (172) zu erzeugen; und
einem Anleger, zum Bereitstellen des erzeugten Kartenträger-Vordrucks (172).

16. Vorrichtung nach einem der Ansprüche 13 bis 15, bei dem die Verarbeitungseinrichtung (106) eine Datenbank umfasst, aus der basierend auf den Kartendaten (186) Daten auslesbar sind, um den Kartenträger-Vordruck (172) und Daten (178) auszuwählen.

17. Vorrichtung nach einem der Ansprüche 13 bis 16, mit einer dritten Leseeinrichtung, die in einem Blattweg zwischen dem Kartenträger-Vordruck-Anleger (130) und dem Drucker (108) angeordnet ist, um von dem bereitgestellten Kartenträger-Vordruck (172) die erste Identifikationsmarkierung (176) zu lesen,
wobei die Verarbeitungseinrichtung (106) angepasst ist, um basierend auf den Kartendaten (186) und der ersten Identifikationsmarkierung (176) zu bestimmen, ob der bereitgestellte Kartenträger-Vordruck (172) und die Karte (186) zusammengehören.

18. Vorrichtung nach einem der Ansprüche 13 bis 17, mit einem Applizierer (112), der die Karte (186) und den Kartenträger (182) zusammenführt und verbindet, falls der Applizierer (112) bestimmt, dass die durch eine weitere Leseeinrichtung in dem Applizierer (112) gelesene zweite Identifikationsmarkierung (180) mit den Kartendaten (186) übereinstimmt.

19. Vorrichtung nach einem der Ansprüche 13 bis 17, mit einem Applizierer (112), der die Karte (186) und den Kartenträger (182) zusammenführt und verbindet, falls der Applizierer (112) bestimmt, dass die zweite Identifikationsmarkierung (180) mit den Kartendaten (186) übereinstimmt, wobei der Applizierer die Kartendaten zusammen mit der Karte empfängt, und wobei der Applizierer die zweite Identifikationsmarkierung zusammen mit dem Kartenträger empfängt.

20. Vorrichtung nach Anspruch 18 oder 19, bei der Applizierer (112) eine Mehrzahl von Karten mit einem Kartenträger (182) verbindet.

21. Vorrichtung nach einem der Ansprüche 13 bis 20, mit einem ersten Puffer (114) zur Aufnahme der durch die erste Leseeinrichtung (104) gelesenen Karten (186), und mit einem zweiten Puffer (110) zur Aufnahme der durch den Drucker (108) erzeugten Kartenträger (182).

22. Vorrichtung nach einem der Ansprüche 13 bis 21, bei dem die vorbestimmten Daten Informationen über den Kartenempfänger und/oder Informationen über einen Kartenherausgeber umfassen.

23. Vorrichtung nach einem der Ansprüche 18 bis 22, mit
einem Falzwerk (146), zumindest einem Beilagenanleger (152) und/oder einem Kuvertierer (154), die in einer Blattlaufrichtung nach dem Applizierer (112) angeordnet sind,
wobei das Falzwerk (146) den Kartenträger (182) falzt, wobei der zumindest eine Beilagenanleger (154) dem Kartenträger (182) eine Beilage zuordnet, und wobei der Kuvertierer (154) den Kartenträger (182) kuvertiert, oder
wobei der zumindest eine Beilagenanleger (152) dem Kartenträger (182) eine Beilage zuordnet, und/oder das Falzwerk den Kartenträger (182) falzt und/oder verschweißt.

## Claims

1. A method of providing a card carrier (182) for bringing together with a card (184), the method comprising:
(b) providing the card (184);
(b) acquiring card data (186) from the card (184);
(c) based on the card data (186), providing a card-carrier blank (172) having a first identification mark (176);
(d) based on the card data (186), printing predetermined data (176) and a second identification mark (180) associated with the predetermined data (176) onto the card-carrier blank (172) so as to form the card carrier (182);
(e) acquiring the first identification mark (176) and the second identification mark (180) from the card carrier (182);
(f) based on the first identification mark (176) and on the second identification mark (180), determining whether the data printed (178) and the card-carrier blank (172) belong together; and
(g) if it is determined that the data (178) and the card-carrier blank (172) belong together, providing the card carrier (182) for bringing it together with the card (184).

2. The method as claimed in claim 1, wherein step (c) comprises:
(c.1.) providing a plurality of card-carrier blanks (172), the plurality of card-carrier blanks comprising at least a first group of card-carrier blanks of a first type and a second group of card-carrier blanks of a second type, each card-carrier blank (172) having a first identification mark (176) corresponding to its type;
(c.2.) based on the card data (186), selecting a card-carrier blank (172) from the plurality of card-carrier blanks; and
(c.3.) providing the card-carrier blank (172) selected.

3. The method as claimed in claim 1, wherein step (c) comprises:
(c.1.) providing an unprinted sheet (170);
(c.2.) based on the card data (186), printing predetermined data (174) and the first identification mark (176) onto the sheet (170) so as to produce the card-carrier blank (172); and
(c.3.) providing the card-carrier blank (172) produced.

4. The method as claimed in any of claims 1 to 3, wherein steps (c) and (d) include reading out a database (106) on the basis of the card data (186) to select the card-carrier blank (172) and data (174).

5. The method as claimed in any of claims 1 to 4, comprising, after step (c) and prior to step (d):
acquiring the first identification mark (176) from the card-carrier blank (172) provided; and
based on the card data (186) and the first identification mark (176), determining whether the card-carrier blank (172) provided and the card (184) belong together.

6. The method as claimed in any of claims 1 to 5, comprising, after step (g):
on the basis of the card data (186) and the first identification mark (176) or the second identification mark (180), determining whether the card (184) and the card carrier (182) belong together; and
if the card carrier (182) and the card (184) belong together, joining the card (184) and the card carrier (182).

7. The method as claimed in any of claims 1 to 5, comprising, after step (g):
on the basis of the card data (186) and the first identification mark (176) and the second identification mark (180), determining whether the card (184) and the card carrier (182) belong together; and
if the card carrier (182) and the card (184) belong together, joining the card (184) and the card carrier (182).

8. The method as claimed in any of claims 1 to 7, wherein a plurality of cards (186) are provided, the cards being read successively in step (b), the cards being buffered (104) after step (b), and the card carriers (182) produced for the plurality of cards being buffered (110) after step (d).

9. The method as claimed in any of claims 1 to 8, wherein the predetermined data includes information about a card receiver or information about a card issuer.

10. The method as claimed in any of claims 7 to 9, comprising, after joining the card (184) and the card carrier (182):
folding (146) the card carrier (182), or
associating supplements (152) with the card carrier (182), or
inserting the card carrier into an envelope (154).

11. The method as claimed in any of claims 7 to 9, comprising, after joining the card (184) and the card carrier (182):
associating supplements with the card carrier, or
folding or sealing the card carrier.

12. The method as claimed in any of claims 7 to 11, wherein a card carrier (182) has a plurality of cards associated with it which are joined with it.

13. An apparatus for providing a card carrier (182) for bringing it together with a card (184), comprising
a card hopper (102) for holding a card or a plurality of cards;
a reading means (104) for reading card data (186) from a card (184);
a card-carrier blank feeder (130) providing a card-carrier blank (172) with a first identification mark (176);
a printer (108) operatively connected to the card-carrier blank feeder (130) to receive a card-carrier blank (172) therefrom and to provide the card-carrier blank (172) with predetermined data (178) and a second identification mark (180) associated with the predetermined data (178), so as to produce the card carrier (182);
a second reading means (172) for reading the first identification mark (176) and the second identification mark (180) from the card carrier (182); and
a processing means (106) adapted to receive the card data (186) from the first reading means (104) and to control the card-carrier blank feeder (130), based on the card data (186), to provide a predetermined card-carrier blank (172), to receive the first identification mark (176) and the second identification mark (180) from the second reading means (132), to determine whether the data (178) printed onto the card-carrier blank (172), and the card-carrier blank (172) belong together, and to control the second reading means (132) to provide the card carrier (182) for bringing it together with the card (184), if the data (178) and the card-carrier blank (172) belong together.

14. The apparatus as claimed in claim 13, wherein the card-carrier blank feeder comprises:
a card-carrier blank hopper (130) to contain a plurality of card-carrier blanks (172) of different types, each card-carrier blank having a first identification mark (176) corresponding to its type; and
a feeder to provide a card-carrier blank (172) selected from the hopper (130) under the control of the processing means (106).

15. The apparatus as claimed in claim 13, wherein the card-carrier blank feeder comprises:
a printer adapted to receive an unprinted sheet (170) and to print predetermined data (174) and the first identification mark (176) onto that sheet under the control of the processing means (106), so as to produce the card-carrier blank (172); and
a feeder for providing the card-carrier blank (172) produced.

16. The apparatus as claimed in any of claims 13 to 15, wherein the processing means (106) includes a database from which data may be read, based on the card data (186), so as to select the card-carrier blank (172) and data (178).

17. The apparatus as claimed in any of claims 13 to 16, having a third reading means arranged in a sheet path between the card-carrier blank feeder (130) and the printer (108) so as to read the first identification mark (176) from the card-carrier blank (172) provided,
the processing means (106) being adapted to determine, on the basis of the card data (186) and the first identification mark (176), whether the card-carrier blank (172) provided and the card (186) belong together.

18. The apparatus as claimed in any of claims 13 to 17, having an applicator (112) which brings together and joins the card (186) and the card carrier (182) if the applicator (112) determines that the second identification mark (180) read by a further reading means in the applicator (112) matches the card data (186).

19. The apparatus as claimed in any of claims 13 to 17, having an applicator (112) which brings together and joins the card (186) and the card carrier (182) if the applicator (112) determines that the second identification mark (180) matches the card data (186), the applicator receiving the card data along with the card, and the applicator receiving the second identification mark along with the card carrier.

20. The apparatus as claimed in claims 18 or 19, wherein the applicator (112) joins a plurality of cards with a card carrier (182).

21. The apparatus as claimed in any of claims 13 to 20, having a first buffer (114) for receiving the cards (186) read by the first reading means (104), and having a second buffer (110) for receiving the card carriers (182) produced by the printer (108).

22. The apparatus as claimed in any of claims 13 to 21, wherein the predetermined data include information about the card receiver or information about a card issuer.

23. The apparatus as claimed in any of claims 18 to 22, comprising
a folding unit (146), at least one supplement feeder (152) or an inserter (154), which are arranged in a sheet conveying direction downstream of the applicator (112),
the folding unit (146) folding the card carrier (182), the at least one supplement feeder (154) associating a supplement with the card carrier (182), and the inserter (154) inserting the card carrier (182) into an envelope, or
the at least one supplement feeder (152) associating a supplement with the card carrier (182), or the folding unit folding or sealing the card carrier (182).

## Revendications

1. Procédé pour préparer un support de carte (182) en vue d'une réunion avec une carte (184), aux étapes suivantes consistant à :
(a) préparer la carte (184) ;
(b) détecter des données (186) de la carte (184) ;
(c) sur base des données de carte (186), préparer un formulaire de support de carte (172) présentant un premier repère d'identification (176) ;
(d) sur base des données de carte (186), imprimer sur le formulaire de support de carte (172) des données prédéterminées (176) et un deuxième repère d'identification (180) associé aux données prédéterminées (178), pour former le support de carte (182) ;
(e) détecter le premier repère d'identification (176) et le deuxième repère d'identification (180) du support de carte (182) ;
(f) sur base du premier repère d'identification (176) et du deuxième repère d'identification (180), déterminer si les données imprimées (178) et le formulaire de support de carte (172) vont ensemble ; et
(g) s'il est déterminé la correspondance entre données (178) et formulaire de support de carte (172), préparer le support de carte (182) en vue de la réunion avec la carte (184).

2. Procédé selon la revendication 1, dans lequel l'étape (c) comporte les étapes suivantes consistant à :
(c.1.) préparer une pluralité de formulaires de support de carte (172), la pluralité de formulaires de support de carte présentant au moins un premier groupe de formulaires de support de carte d'un premier type et un deuxième groupe formulaires de support de carte d'un deuxième type, chaque support de carte (172) présentant un premier repère d'identification (176) correspondant à son type ;
(c.2.) sur base des données de carte (186), sélectionner un formulaire de support de carte (172) parmi la pluralité de formulaires de support de carte; et
(c.3.) préparer le formulaire de support de carte sélectionné (172).

3. Procédé selon la revendication 1, dans lequel l'étape (c) présente les étapes suivantes consistant à :
(c.1.) préparer une feuille non imprimée (170) ;
(c.2.) sur base des données de carte (186), imprimer sur la feuille (170) des données prédéterminées (174) et le premier repère d'identification (176), pour générer le formulaire de support de carte (172) ; et
(c.3.) préparer le formulaire de support de carte généré (172).

4. Procédé selon l'une des revendications 1 à 3, dans lequel les étapes (c) et (d) comprennent la lecture d'une banque de données (106) sur base des données de carte (186), pour sélectionner le formulaire de support de carte (172) et les données (174).

5. Procédé selon l'une des revendications 1 à 4, comprenant, après l'étape (c) et avant l'étape (d), les d'étapes suivantes consistant à :
détecter le premier repère d'identification (176) du formulaire de support de carte préparé (172) ; et
sur base des données de carte (186) et du premier repère d'identification (176), déterminer si le formulaire de support de carte préparé (172) et la carte (184) vont ensemble.

6. Procédé selon l'une des revendications 1 à 5, présentant, après l'étape (g), les étapes suivantes consistant à :
sur base des données de carte (186) et du premier repère d'identification (176) ou du deuxième repère d'identification (180), déterminer si la carte (194) et le support de carte (182) vont ensemble ; et
si le support de carte (182) et la carte (184) vont ensemble, assembler la carte (184) avec le support de carte (182).

7. Procédé selon l'une des revendications 1 à 5, présentant, après l'étape (g), les étapes suivantes consistant à :
sur base des données de carte (186) et du premier repère d'identification (176) et du deuxième repère d'identification (180), déterminer si la carte (184) et le support de carte (182) vont ensemble ; et
si le support de carte (182) et la carte (184) vont ensemble, assembler la carte (184) au support de carte (182).

8. Procédé selon l'une des revendications 1 à 7, dans lequel sont prévues une pluralité de cartes (186), les cartes étant lues successivement à l'étape (b), les cartes étant placées dans un tampon après l'étape (b) (104), et les supports de carte (182) générés pour la pluralité de cartes étant placés dans un tampon après l'étape (d) (110).

9. Procédé selon l'une des revendications 1 à 8, dans lequel les données prédéterminées comportent des informations sur un destinataire de carte et/ou des informations sur un éditeur de cartes.

10. Procédé selon l'une des revendications 7 à 9, aux étapes suivantes après l'assemblage de la carte (184) et du support de carte (182) :
plier (146) le support de carte (182), et/ou
associer des annexes (152) au support de carte (182), et/ou
mettre sous pli le support de carte (154).

11. Procédé selon l'une des revendications 7 à 9, aux étapes suivantes après l'assemblage de la carte (184) et du support de carte (182):
associer des annexes au support de carte, et/ou
plier et/ ou souder le support de carte.

12. Procédé selon l'une des revendications 7 à 11, dans lequel une pluralité de cartes sont associées à un support de carte (182) et assemblées avec ce dernier.

13. Dispositif pour la préparation d'un support de carte (182) en vue de la réunion avec une carte (184), avec
un magasin à cartes (102) destiné à contenir une carte ou une pluralité de cartes ;
un dispositif de lecture (104) destiné à lire des données (186) d'une carte (184) ;
un applicateur de formulaire de support de carte (130) qui prépare un formulaire de support de carte (172) avec un premier repère d'identification (176) ;
une imprimante (108) qui est reliée effectivement avec l'applicateur de formulaire de support de carte (130), pour recevoir de ce dernier un formulaire de support de carte (172) et y imprimer des données prédéterminées (178) et un deuxième repère d'identification (180) associé aux données prédéterminées (178), pour générer le support de carte (182) ;
un deuxième dispositif de lecture (172) destiné à lire du support de carte (182) le premier repère d'identification (176) et le deuxième repère d'identification (180) ; et
un dispositif de traitement (106) adapté pour recevoir du premier dispositif de lecture (104) les données de carte (186) et commander, sur base des données de carte (186), l'applicateur de formulaires de support de carte (130), pour préparer un formulaire de support de carte (172) prédéterminé, pour recevoir du deuxième dispositif de lecture (132) le premier repère d'identification (176) et le deuxième repère d'identification (180), pour déterminer si les données imprimées (178) sur le formulaire de support de carte (172) et le formulaire de support de carte (172) vont ensemble, et pour commander le deuxième dispositif de lecture (132), pour préparer le support de carte (182) en vue de là réunion avec la carte (184) si les données (178) et le formulaire de support de carte (172) vont ensemble.

14. Dispositif selon la revendication 13, dans lequel l'applicateur de formulaire de support de carte comporte les caractéristiques suivantes :
un magasin à formulaires de support de carte (130), destiné à recevoir une pluralité de formulaires de support de carte (172) d'un type différent, chaque formulaire de support de carte présentant un premier repère d'identification (176) correspondant à son type ; et
un applicateur, destiné à préparer un formulaire de support de carte (172) qui est sélectionné du magasin (130) sous la commande du dispositif de traitement (106).

15. Dispositif selon la revendication 13, dans lequel l'applicateur de formulaire de support de carte comporte les caractéristiques suivantes :
une imprimante qui est adaptée pour recevoir une feuille non imprimée (170) et y imprimer, sous la commande du dispositif de traitement (106), les données prédéterminées (174) et le premier repère d'identification (176), pour générer le formulaire de support de carte (172) ; et
un applicateur destiné à préparer le formulaire de support de carte généré (172).

16. Dispositif selon l'une des revendications 13 à 15, dans lequel le dispositif de traitement (106) comporte une banque de données de laquelle peuvent être lues, sur base des données de carte (186), des données pour sélectionner le formulaire de support de carte (172) et les données (178).

17. Dispositif selon l'une des revendications 13 à 16, avec un troisième dispositif de lecture disposé sur un trajet de feuille entre l'applicateur de formulaire de support de carte (130) et l'imprimante (108), pour lire du formulaire de support de carte (172) préparé le premier repère d'identification (176),
le dispositif de traitement (106) étant adapté, pour déterminer, sur base des données de carte (186) et du premier repère d'identification (176), si le formulaire de support de carte préparé (172) et la carte (186) vont ensemble.

18. Dispositif selon l'une des revendications 13 à 17, avec un applicateur (112) qui réunit et assemble la carte (186) et le support de carte (182) si l'applicateur (112) détermine que le deuxième repère d'identification (180) lu par un autre dispositif de lecture dans l'applicateur (112) correspond aux données de carte (186).

19. Dispositif selon l'une des revendications 13 à 17, avec un applicateur (112) qui réunit et assemble la carte (186) et le support de carte (182) si l'applicateur (112) détermine que le deuxième repère d'identification (180) correspond aux données de carte (186), l'applicateur recevant les données de carte ensemble avec la carte, et l'applicateur recevant le deuxième repère d'identification ensemble avec le support de carte.

20. Dispositif selon la revendication 18 ou 19, dans lequel l'applicateur (112) assemble une pluralité de cartes avec un support de carte (182).

21. Dispositif selon l'une des revendications 13 à 20, avec un premier tampon (114) destiné à recevoir les cartes (186) lues par le premier dispositif de lecture (104), et
avec un deuxième tampon (110) destiné à recevoir les supports de carte (182) générés par l'imprimante (108).

22. Dispositif selon l'une des revendications 13 à 21, dans lequel les données prédéterminées comportent des informations sur le destinataire de la carte et/ou des informations sur un éditeur de cartes.

23. Dispositif selon l'une des revendications 10 à 22, avec
un dispositif de pliage (146), au moins un applicateur d'annexes (152) et/ou un dispositif de mise sous enveloppe (154) qui sont disposés, dans une direction de déplacement de feuille, après l'applicateur (112),
le dispositif de pliage (146) pliant le support de carte (182), l'au moins un applicateur d'annexes (154) associant une annexe au support de carte (182), et le dispositif de mise sous enveloppe (154) mettant sous enveloppe le support de carte (182), ou
l'au moins un applicateur d'annexes (152) associant une annexe au support de carte (182), et/ou le dispositif de pliage pliant et/ou soudant le support de carte (182).
